(19) Europäisches Patentamt
European Patent Office
Office européen des brevets

(11) **EP 0 719 717 B1**

(12) **FASCICULE DE BREVET EUROPEEN**

(45) Date de publication et mention
de la délivrance du brevet:
**21.04.1999 Bulletin 1999/16**

(51) Int. Cl.⁶: **B65G 11/20**

(21) Numéro de dépôt: **95460044.1**

(22) Date de dépôt: **28.12.1995**

(54) **Dispositif régulateur d'énergie cinétique**

Vorrichtung zur Begrenzung der kinetischen Energie

Kinetic energy controlling device

(84) Etats contractants désignés:
**CH DE DK GB IT LI NL**

(30) Priorité: **29.12.1994 FR 9416031**

(43) Date de publication de la demande:
**03.07.1996 Bulletin 1996/27**

(73) Titulaire: **LA POSTE**
**F-92777 Boulogne Billancourt Cédex (FR)**

(72) Inventeurs:
• **Fauchard, Pierre**
**F-44200 Nantes (FR)**

• **Bosser, Patrick**
**F-44880 Sautron (FR)**

(74) Mandataire:
**Schmit, Christian Norbert Marie**
**Cabinet Ballot-Schmit**
**4, rue Général Hoche**
**Boîte Postale 855**
**56108 Lorient Cédex (FR)**

(56) Documents cités:
**FR-A- 2 416 854**          **US-A- 3 136 401**

## Description

La présente invention concerne un dispositif régulateur d'énergie cinétique destiné à être intégré dans des installations de manutention d'objets ou charges, pour les transférer d'un niveau supérieur à un niveau plus bas.

L'invention sera utile, par exemple, pour transférer des objets hétérogènes en forme et en poids entre un moyen d'amenée et un lieu ou conteneur de réception se trouvant à un niveau inférieur, qu'il s'agisse de colis postaux, de bagages, etc.

Dans le domaine du tri postal de colis ou paquets, il existe des machines de tri comportant un carrousel de plateaux avançant en continu, lesquels plateaux reçoivent des paquets un à un en des postes de chargement, pour les acheminer en divers points de destination correspondant à des adresses. En ces points de destination, les plateaux se déchargent de leur paquet par basculement, et celui-ci est transféré dans un conteneur disposé légèrement écarté du carrousel, à un niveau inférieur. Pour assurer le transfert des paquets, le moyen le plus simple consiste en une section de convoyeur par gravité à sole lisse ou à rouleaux montés fous. Toutefois, ce moyen ne donne pas satisfaction dès que les paquets atteignent un certain poids : en effet, ils arrivent dans le conteneur avec une énergie cinétique importante qui peut être la source de dommages pour eux-mêmes et ceux qui sont déjà dans le conteneur.

A ce problème, il a été proposé plusieurs solutions. L'une consiste à remplacer le convoyeur par gravité par des convoyeurs à bande ou à rouleaux motorisés. Ce système a l'inconvénient d'opérer une régulation en vitesse et non en énergie cinétique : les colis légers sont freinés de la même façon que les colis plus lourds, ce qui peut être pénalisant du point de vue des cadences. De plus, multiplié par le nombre de directions, le système représente un cout important, et il nécessite une gestion et une surveillance en permanence, avec toujours le risque qu'une destination devienne inopérante en cas de panne.

On a pensé également à conserver les convoyeurs par gravité sus-mentionnés, en les équipant de bavettes de ralentissement composées de lanières souples implantées verticalement au-dessus des voies. Elles ont l'avantage d'une mise en oeuvre simple et peu coûteuse, mais aussi l'inconvénient de bloquer les paquets légers de dimensions importantes par rapport à leur masse, et qui représentent un pourcentage notable des colis postaux.

Un autre système consiste en des glissières à profil concave et dont le tracé est courbe. Les paquets y sont animés d'une force centrifuge proportionnelle à leur masse : plus le paquet sera lourd, plus il aura tendance à monter vers l'extérieur sur la glissière, et plus la résistance des forces de frottement sera importante. Toutefois, pour une masse donnée, le comportement des paquets différera en fonction de leur forme, et un paquet parallélépipédique rigide dont la surface de frottement se réduira à deux arêtes basses sera moins freiné qu'un paquet plat et mou.

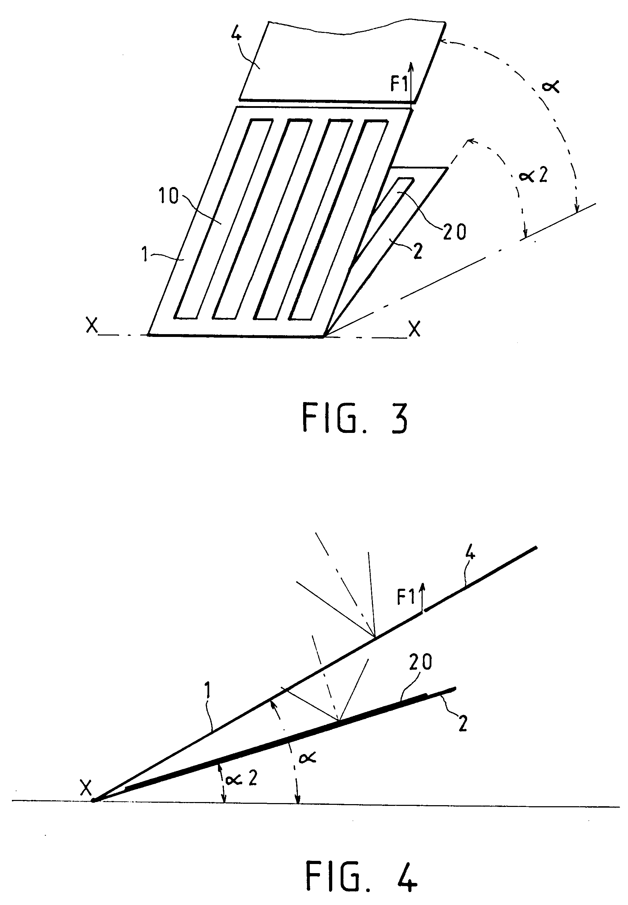

Est connu également de par le document FR-A-2 416 854 un système régulateur pour un convoyeur par gravité à rouleaux, destiné au transport de charges contenues dans des récipients. Le système a pour fonction d'empêcher les récipients les plus fortement chargés de prendre une vitesse excessive, sans être opérants pour des récipients plus légers. A cet effet, le convoyeur comprend des rouleaux de freinage disposés au-dessous du plan d'appui normal constitué par les rouleaux porteurs, et sur lesquels ne vient en contact que le fond des récipients dépassant un poids déterminé. Dans la forme de réalisation représentée à la Fig. 3, ce contact est obtenu du fait que dans la zone de chaque rouleau de freinage, la voie du convoyeur se présente sous la forme d'une section pivotante autour de son extrémité aval, qui s'abaisse lorsqu'elle reçoit une charge au-delà d'un poids détermine.

L'invention a été réalisée dans le but d'apporter une réponse plus satisfaisante que les diverses solutions existantes à ce problème de transfert d'objets, qui soit à la fois efficace, fiable, simple de mise en oeuvre et peu coûteuse.

A cet effet, l'invention consiste en un dispositif pour transférer des objets entre un niveau supérieur et un niveau plus bas, comprenant en sortie d'un moyen d'amenée des objets, un plan incliné récepteur, et caractérisé en ce que ledit plan incliné récepteur est monté pivotant le long de son côté inférieur autour d'un axe transversal, pour avoir une capacité de pivotement vers le bas à partir d'une position supérieure et contre un couple de rappel vers ladite position supérieure, de telle manière qu'à réception d'un objet de masse au-delà d'un certain seuil, le plan récepteur s'abaisse momentanément jusqu'à ce que le couple que l'objet exerce sur ledit plan récepteur redevienne inférieur au couple de rappel en position supérieure dudit plan récepteur, ledit objet étant ralenti par frottement contre ledit plan récepteur pendant la durée d'abaissement de celui-ci.

Par conséquent, un objet de masse inférieure à un certain seuil transite sur ledit plan récepteur sans que celui-ci quitte sa position haute. En pratique, le coefficient de frottement du plan récepteur et l'angle de son inclinaison par rapport à l'horizontale en position haute seront choisis tels que cet objet sera légèrement accéléré pendant son transit.

En revanche, un objet plus lourd provoquera l'abaissement momentané du plan récepteur dont l'angle d'inclinaison par rapport à l'horizontale diminuera de telle façon que l'objet sera ralenti sous l'effet des forces de frottement. D'autre part, la longueur de transit de l'objet sur le plan récepteur abaissé sera fonction de sa masse, puisqu'elle influera sur la vitesse d'abaissement du plan récepteur ainsi que sur sa remontée qui sera d'autant plus tardive que ladite masse est importante. Par conséquent, plus un objet sera lourd, et plus il sera freiné, de sorte que sera ainsi mise en oeuvre une régulation de l'énergie cinétique des objets en sortie du dispositif.

Selon une autre caractéristique de l'invention, le dispositif comprend un second plan incliné placé sous ledit plan récepteur, lequel plan récepteur comporte des lumières de telle façon que lorsqu'il s'abaisse, ledit second plan vient s'imbriquer par des bossages de forme complémentaire dans lesdites lumières.

Le second plan peut être fixe et avoir un coefficient de frottement supérieur à celui du plan récepteur.

En variante, le second plan est lui-même articulé comme le plan récepteur le long de son côté inférieur autour d'un axe transversal, de manière à avoir une aptitude de pivotement vers le bas à partir d'une position supérieure, à l'encontre d'un couple de rappel.

De la même façon, on peut prévoir un ou plusieurs plans supplémentaires sous ledit second plan, venant s'imbriquer dans les plans supérieurs quand ceux-ci s'abaissent.

L'invention sera mieux comprise à l'aide des explications qui vont suivre et des dessins annexés, dans lesquels :

la Fig. 1 est une vue schématique de côté d'un dispositif selon l'invention comportant un seul plan récepteur ;
la Fig. 2 est une vue similaire à la Fig. 1 du même dispositif, montrant le plan récepteur en position abaissée ;
la Fig. 3 est une vue schématique en perspective d'une seconde forme de réalisation de l'invention ;
la Fig. 4 est une vue schématique de côté du dispositif de la Fig. 3 ;
la Fig. 5 est une vue schématique de côté d'une troisième forme de réalisation de l'invention ;
la Fig. 6 est une vue partielle schématique montrant un exemple de réalisation de plan ajouré pour l'imbrication d'un plan inférieur ; et
la Fig. 7 est une vue partielle schématique en coupe longitudinale de deux plans d'un dispositif selon l'invention imbriqués l'un dans l'autre.

Dans l'ensemble des dessins, les mêmes signes de référence ont été utilisés pour désigner partout les mêmes éléments.

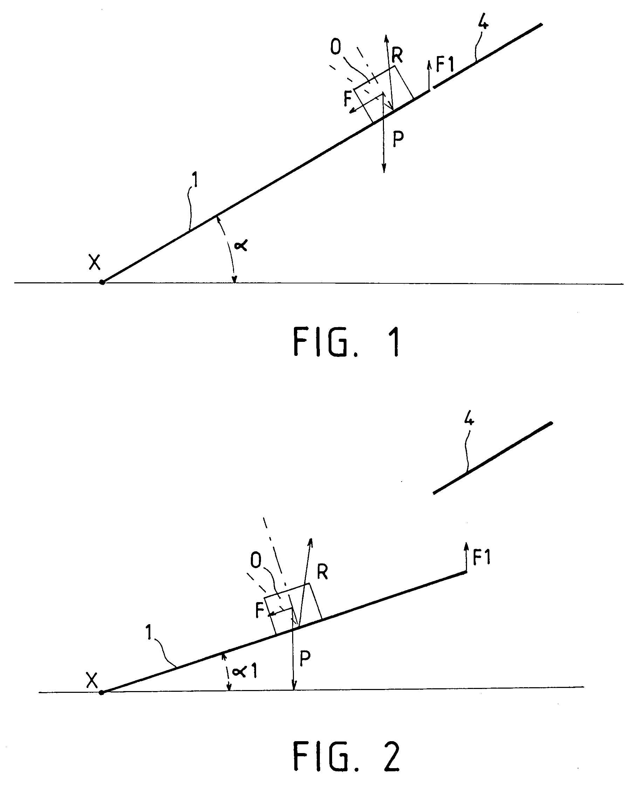

Considérant ces dessins, et tout d'abord les Figs. 1 et 2, elles représentent un dispositif selon l'invention de régulation de l'énergie cinétique d'objets O transférés d'un niveau supérieur à un niveau inférieur par l'intermédiaire d'un plan récepteur 1 incliné sur l'horizontale d'un angle α, et en amont duquel se trouve une glissière fixe d'amenée 4.

Selon l'invention, le plan 1 est articulé le long de son côté inférieur autour d'un axe transversal X. Il peut donc, à partir de sa position supérieure représentée à la Fig. 1, pivoter vers le bas jusqu'à une position inférieure représentée à la Fig. 2 et pour laquelle son angle d'inclinaison sur l'horizontale est α1. Le pivotement vers le bas du plan 1 a lieu à l'encontre d'un couple résistant représenté par la force F1. Ce couple résistant est avantageusement obtenu au moyen d'un système à contrepoids, celui-ci étant fixé à une extrémité d'un câble passant sur une poulie et relié par son autre extrémité au côté supérieur du plan 1.

Le plan 1 a un coefficient de frottement égal à tgφ, représenté par son cône d'adhérence sur les dessins tandis que l'objet O est représenté avec son poids P, la composante F de celui-ci parallèle à la pente du plan 1 et la composante R sur le cône d'adhérence de la réaction du plan P. Les angles α et α1 sont choisis de manière à satisfaire la relation :

$$\alpha > \varphi > \alpha1$$

Ainsi, considérant que les équations élémentaires relatives à la vitesse V et à l'accélération γ d'un objet sur un plan incliné fixe sont :

$$V = V_0 + \gamma t$$

où

$V_0$ est la vitesse initiale de l'objet,
$\gamma$ l'accélération,
et t le temps ;

et

$$\gamma = g \cos\alpha(tg\alpha - tg\varphi)$$

Il apparaît qu'un objet dont la masse n'est pas suffisante pour provoquer l'abaissement du plan 1 transite sur celui-ci en étant légèrement accéléré puisque le terme (tgα - tgφ) est légèrement positif.

Par contre, pour un objet O dont le poids est supérieur à F1, il y a abaissement du plan 1 à son angle d'inclinaison α1, Fig. 2, jusqu'à ce que l'objet atteigne une position le long du plan 1 pour laquelle le couple résistant de F1 redevient supérieur au couple du poids P de l'objet par rapport à l'axe de pivotement X. Par conséquent, avant abaissement du plan 1, l'objet O sera légèrement accéléré, puis ralenti ensuite tant que le plan 1 sera en position basse, étant donné que le terme (tgα - tgφ) sera négatif. Enfin, lorsque le plan 1 se relèvera, l'objet O sera à nouveau accéléré jusqu'en sortie.

La course de ralentissement de l'objet O sur le plan récepteur 1 est doublement fonction de sa masse puisque celle-ci influe d'une part sur la vitesse d'abaissement du plan 1 et, d'autre part, sur la position pour laquelle le plan 1 va se relever. Par conséquent, plus un objet sera lourd, et plus sera réduite sa vitesse en sortie du dispositif qui agit donc en régulation de l'énergie cinétique des objets.

En vue d'une meilleure efficacité, il convient de prévoir au moins un autre plan sous le plan récepteur 1.

Aux Figs. 3 et 4, le dispositif représenté comporte comme précédemment un plan récepteur 1 articulé le long de son côté inférieur autour d'un axe transversal X et desservi par une glissière 4 d'amenée d'objets. En position relevée, le plan récepteur 1 est incliné d'un angle α par rapport à l'horizontale. Sous le plan récepteur 1, est disposé un second plan fixe 2, qui le croise sensiblement selon l'axe X, et qui est incliné d'un angle α2 par rapport à l'horizontale.

Comme on le voit mieux à la Fig. 3, le plan récepteur 1 présente des lumières 10, et le second plan 2 présente quant à lui des bossages 20 de forme complémentaire destinés à s'imbriquer dans les lumières 10 quand le plan 1 s'abaisse sur le second plan 2. A des fins de clarté du dessin, les lumières 10 et les bossages 20 ont été représentés sous des formes allongées longitudinalement, mais on verra dans la suite que celles-ci peuvent être différentes. Le second plan 2 a un coefficient de frottement sensiblement plus élevé que celui du plan récepteur 1, illustré par un cône d'adhérence plus évasé à la Fig. 4.

Ainsi, pour ralentir les objets lourds, on n'intervient plus seulement au niveau de l'angle d'inclinaison du plan récepteur 1, mais également au niveau du coefficient de frottement, ce qui permet d'une part de réduire l'amplitude de pivotement du plan récepteur 1 et, d'autre part, de traiter des objets dans une plage de masses plus étendue tout en maintenant l'énergie cinétique des objets en sortie du dispositif dans des limites souhaitées.

Dans une variante du dispositif des Figs. 3 et 4, le second plan 2 est lui-même articulé autour de l'axe X pour avoir une aptitude de pivotement vers le bas à partir de sa position supérieure, à l'encontre d'un couple de rappel en position haute. Les objets traités se subdivisent alors en trois catégories : objets légers qui transitent sur le plan récepteur 1 sans que celui-ci s'abaisse, objets de masse intermédiaire qui provoquent l'abaissement du plan récepteur 1 sur le second plan 2 en position haute, et objets lourds qui provoquent l'abaissement du plan récepteur 1 sur le second plan 2 lui-même en position basse.

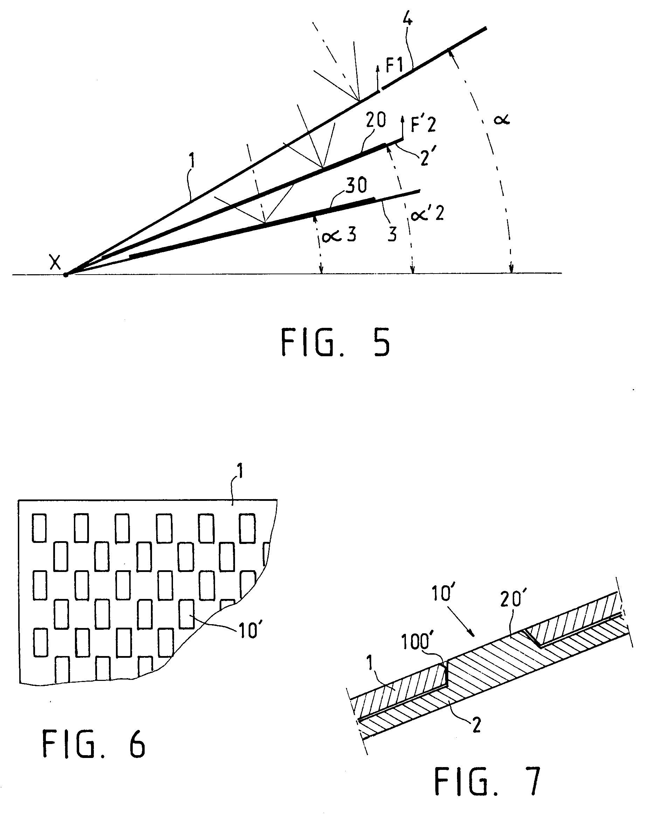

Le dispositif selon l'invention représenté à la Fig. 5 comporte trois plans, soit un plan récepteur 1 desservi par une glissière d'amenée 4, un second plan 2' sous le plan récepteur 1, et un troisième plan 3 sous le second plan 2'. Au repos, les angles d'inclinaison sur l'horizontale des plans 1, 2' et 3 sont respectivement α, α2 et α3. Les deux premiers plans 1 et 2' sont articulés autour de l'axe X de manière à pouvoir pivoter vers le bas à partir de leur position haute, à l'encontre de couples de rappel en position haute, représentés respectivement par F1 et F'2.

Le troisième plan 3 est fixe. Il a un coefficient de frottement supérieur à celui du second plan 2', celui du second plan 2' étant à son tour supérieur à celui du plan récepteur 1. Comme le plan récepteur 1, le second plan 2' comporte des lumières dans ses bossages 20, dans lesquelles s'imbriquent des plots 30 de forme complémentaire du plan inférieur 3 lorsque le second plan 2' s'abaisse sur lui.

De même qu'avec l'exemple de réalisation décrit immédiatement auparavant, les objets traités se subdivisent en trois catégories selon leur masse, les possibilités du dispositif étant augmentées.

Bien entendu, le troisième plan 3, au lieu d'être fixe, pourrait être lui aussi articulé autour de l'axe X pour avoir une capacité de pivotement vers le bas à l'encontre d'un couple de rappel en position haute.

Les Figs. 6 et 7 illustrent à titre d'exemple une forme de réalisation possible de deux plans d'un dispositif selon l'invention destinés à s'imbriquer l'un dans l'autre. La Fig. 6 représente de dessus un plan supérieur 1 présentant des rangées de lumières rectangulaires 10', lesquelles sont disposées en quinconce entre rangées successives. A la Fig. 7, on voit un bossage ou plot correspondant 20' d'un plan inférieur 2 imbriqué dans une lumière 10'. De préférence, les faces latérales des bossages ou plots 20' sont inclinées par rapport au plan 2 et, de même, les lumières 10' sont évasées de la face inférieure vers la face supérieure du plan 1, de manière à ce que s'opère automatiquement un recentrage entre les plans quand ils s'imbriquent l'un dans l'autre. D'autre part, sur le plan récepteur 1, on pourra prévoir une forme dégageante dans le sens de la pente des lumières 10' (dont l'arête 100' apparait abattue à la Fig. 7) pour éviter tout coincement d'objet.

Le dispositif de l'invention, notamment en ses formes de réalisation des Figs. 3, 4 et 5 permet, par des choix appropriés des différents coefficients de frottement et des couples de rappel des plans articulés, une gestion très intéressante de l'énergie cinétique d'objets ou de charges, même en cas de forte hétérogénéité de ceux-ci du point de vue de leur masse. A noter au surplus que le dispositif revient de lui-même en position neutre pour recevoir un objet arrivant, et ceci avant la sortie de l'objet précédent.

**Revendications**

1. Dispositif pour transférer des objets (O) entre un niveau supérieur et un niveau plus bas, comprenant en sortie d'un moyen d'amenée (4) des objets (O) un plan incliné récepteur (1), caractérisé en ce que le plan récepteur (1) est monté pivotant le long de son côté inférieur autour d'un axe transversal (X), pour avoir une capacité de pivotement vers le bas à partir d'une position supérieure et à l'encontre d'un couple de rappel vers ladite position supérieure, de telle manière qu'à réception d'un objet (O) de masse au-delà d'une certaine seuil, le plan récepteur (1) s'abaisse momentanément jusqu'à ce que le couple que l'objet (O) exerce sur ledit plan récepteur (1) redevienne inférieur au couple de rappel en position supérieure dudit plan récepteur (1), ledit objet (O) étant ralenti par frottement contre ledit plan récepteur (1) pendant la durée d'abaissement de celui-ci.

2. Dispositif selon la revendication 1, caractérisé en ce qu'il comprend un second plan incliné (2, 2') placé sous ledit plan récepteur (1), lequel plan récepteur (1) comporte des lumières (10, 10') de telle façon que lorsqu'il s'abaisse, ledit second plan vient s'imbriquer par des bossages (20, 20') de forme complémentaire dans lesdites lumières (10, 10').

3. Dispositif selon la revendication 2, caractérisé en ce que le second plan (2) est fixe et a un coefficient de frottement supérieur à celui dudit plan récepteur (1).

4. Dispositif selon la revendication 2, caractérisé en ce que le second plan (2') est lui-même articulé le long de son côté inférieur autour d'un axe transversal (X), pour avoir une aptitude de pivotement vers le bas à partir d'une position supérieure, à l'encontre d'un couple de rappel.

5. Dispositif selon la revendication 4, caractérisé en ce qu'il comporte un troisième plan (3) placé sous le second plan (2'), lequel plan (2') comporte des lumières dans ses bossages (20) de telle façon que lorsqu'il s'abaisse, le troisième plan (3) vienne s'imbriquer par des bossages de forme complémentaire dans les lumières des bossages (20).

6. Dispositif selon la revendication 5, caractérisé en ce que le troisième plan (3) est fixe et a un coefficient de frottement supérieur à celui du second plan (2').

7. Dispositif selon la revendication 5, caractérisé en ce que le troisième plan (3) est lui-même articulé le long de son côté inférieur autour d'un axe transversal (X), de manière à avoir une aptitude de pivotement vers le bas à partir d'une position supérieure, à l'encontre d'un couple de rappel.

8. Dispositif selon l'une des revendications 2 à 7, caractérisé en ce que lesdites lumières (10') dans le plan récepteur (1), et les bossages ou plots correspondants (20') dans le plan (2, 2') sont agencés en rangées, et en quinconce entre rangées successives.

9. Dispositif selon l'une des revendications 2 à 8, caractérisé en ce que lesdits bossages ou plots (20') dans un plan (2, 2') ont leurs parois latérales inclinées par rapport audit plan (2, 2') et, de même, les lumières correspondantes (10') dans le plan supérieur (1) sont évasées de la face inférieure vers la face supérieure, afin que s'opère automatiquement un recentrage des plans (1 et 2 ou 2') lorsqu'ils s'imbriquent l'un dans l'autre.

10. Dispositif selon l'une des revendications 1 à 9, caractérisé en ce que les plans articulés (1, 2', 3) sont rappelés en position haute au moyen de systèmes à contrepoids.

**Claims**

1. A device for transferring objects (O) between an upper level and a lower level, having at the output of a means for lowering (4) the objects (O) an inclined receiving plane (1), characterised in that the receiving plane (1) is mounted so that it pivots at its bottom edge about a transverse axis (X) so that it can pivot down from an upper position and against a return force acting towards the upper position so that on receiving an object (O) of a mass above a certain threshold, the receiving plane (1) is lowered temporarily until the quote which the object (O) exerts on said receiving plane (1) reverts to being lower than the quote returning said receiving plane (1) to the upper position, said object (O) being braked by means of friction against said receiving plane (1) whilst the latter is being lowered.

2. A device as claimed in claim 1, characterised in that it has a second inclined plane (2, 2') located underneath said receiving plane(1), the receiving plane (1) having orifices (10, 10') so that when it is lowered, the second plane interlocks therewith by means of bosses (20, 20') of a matching shape in said orifices (10, 10').

3. A device as claimed in claim 2, characterised in that the second plane (2) is fixed and has a higher friction coefficient than that of the receiving plane (1).

4. A device as claimed in claim 2, characterised in that the second plane (2') in turn pivots at its bottom edge about a transverse axis (X) so that it can pivot down from an upper position against a return force.

5. A device as claimed in claim 4, characterised in that it has a third plane (3) disposed underneath the second plane (2'), the second plane (2') having orifices in its bosses (20) so that when it is lowered, the third plane (3) interlocks therewith by means of bosses of a matching shape in the orifices of the bosses (20).

6. A device as claimed in claim 5, characterised in that the third plane (3) is fixed and has a higher friction coefficient than that of the second plane (2').

7. A device as claimed in claim 5, characterised in that the third plane 93) in turn pivots at its bottom edge about a transverse axis (X) so that it can pivot down from an upper position against a return force.

8. A device as claimed in one of claims 2 to 7, characterised in that said orifices (10') in the receiving plane (1) and the corresponding bosses or blocks (20') in plane (2, 2') are arranged in rows and between alternately staggered successive rows.

9. A device as claimed in one of claims 2 to 8, characterised in that said bosses or blocks (20') in a plane (2, 2') have lateral walls which are inclined relative to the plane (2, 2') and, similarly, the corresponding orifices (10') in the upper plane (1) taper from the lower face to the upper face so that the planes (1 and 2 or 2') will be automatically re-centred when they interlock with one another.

10. A device as claimed in one of claims 1 to 9, characterised in that the pivoted planes (1, 2', 3) are returned to the upper position by means of counterweight systems.

**Patentansprüche**

1. Vorrichtung zum Transportieren von Gegenständen (0) zwischen einer höheren Position und einer niedrigeren Position, die am Ausgang einer Zufuhrvorrichtung (4) von Gegenständen (0) eine geneigte Aufnahmevorrichtungsebene (1) umfaßt, **dadurch gekennzeichnet**, daß die Aufnahmevorrichtungsebene (1) drehbar entlang ihrer unteren Seite um eine transversale Achse (X) befestigt ist, so daß eine Drehung nach unten aus einer oberen Position und gegen ein Federmoment in die obere Position möglich ist, so daß bei Empfang eines Gegenstandes (0) mit einer Masse, die größer als ein bestimmter Schwellenwert ist, die Aufnahmevorrichtungsebene (1) sich momentan absenkt, bis das Moment, das der Gegenstand (0) auf die Aufnahmevorrichtungsebene (1) ausübt, kleiner als das Federmoment in die obere Position der Aufnahmevorrichtungsebene (1) ist, wobei der Gegenstand (0) durch Reibung an der Aufnahmevorrichtungsebene (1) während der Dauer des Absenkens dieser verlangsamt wird.

2. Vorrichtung nach Anspruch 1, dadurch gekennzeichnet, daß sie eine zweite geneigte Ebene (2, 2') unterhalb der Aufnahmevorrichtungsebene (1) umfaßt, wobei die Aufnahmevorrichtungsebene (1) Öffnungen (10, 10') umfaßt, so daß bei deren Absenken die zweite Ebene sich mit Wülsten (20, 20') mit komplementärer Form in den Öffnungen (10, 10') überschneidet.

3. Vorrichtung nach Anspruch 2, dadurch gekennzeichnet, daß die zweite Ebene (2) fest ist und einen Reibungskoeffizienten hat, der größer als der der Aufnahmevorrichtungsebene (1) ist.

4. Vorrichtung nach Anspruch 2, dadurch gekennzeichnet, daß die zweite Ebene (2') selbst entlang ihrer unteren Seite um eine transversale Achse (X) beweglich befestigt ist, so daß eine Drehung nach unten aus einer oberen Position von ihr gegen ein Federmoment möglich ist.

5. Vorrichtung nach Anspruch 4, dadurch gekennzeichnet, daß sie eine dritte Ebene (3) unter der zweiten Ebene (2') umfaßt, wobei die Ebene (2') Öffnungen in ihren Wülsten (20) aufweist, so daß bei ihrem Absenken sich die dritte Ebene (3) über Wülste komplementärer Form mit Öffnungen der Wülste (20) überschneidet.

6. Vorrichtung nach Anspruch 5, dadurch gekennzeichnet, daß die dritte Ebene (3) fest ist und einen Reibungskoeffizienten hat, der größer als der der zweiten Ebene (2') ist.

7. Vorrichtung nach Anspruch 5, dadurch gekennzeichnet, daß die dritte Ebene (3) selbst entlang ihrer unteren Seite um eine transversale Achse (X) drehbar befestigt ist, so daß eine Drehung nach unten aus einer oberen Position entgegen einem Federmoment möglich ist.

8. Vorrichtung nach einem der Ansprüche 2 bis 7, dadurch gekennzeichnet, daß die Öffnungen (10') in der Aufnahmevorrichtungsebene (1) und die entsprechenden Wülste oder Zapfen (20') in der Ebene (2, 2') geformt und in Fünfergruppen zwischen den Reihen versetzt angeordnet sind.

9. Vorrichtung nach einem der Ansprüche 2 bis 8, dadurch gekennzeichnet, daß die Wülste oder Zapfen (20') in einer Ebene (2, 2') in bezug auf die Ebene (2, 2') geneigte Seitenwände haben und außerdem die entsprechenden Öffnungen (10') in der oberen Ebene (1) sich von der unteren Seite zur oberen Seite hin öffnen, um so automatisch eine Zentrierung der Ebenen (1 und 2 oder 2') sicherzustellen, wenn sie sich miteinander überschneiden.

10. Vorrichtung nach einem der Ansprüche 1 bis 9, dadurch gekennzeichnet, daß

die beweglich befestigten Ebenen (1, 2', 3) in die obere Position mittels Gegengewichtssystemen gedrückt werden.

FIG. 1

FIG. 2

FIG. 3

FIG. 4

FIG. 5

FIG. 6

FIG. 7